# EUROPEAN PATENT APPLICATION

(11) **EP 4 546 372 A1**
(43) Date of publication of application: **30.04.2025**
(21) Application number: 23929413.5
(22) Date of filing: 31.03.2023
(51) Int. Cl.: G21C 17/003, G01N 33/00

(54) **DRIVING DEVICE FOR CURVED TOP COVER, POSITIONING CHECKER, AND POSITIONING AND DETECTING METHOD**

(71) Applicant: CGNPC Inspection Technology Co., Ltd., Shenzhen, Guangdong 518000 (CN); Suzhou Nuclear Power Research Institute Co., Ltd., Suzhou, Jiangsu 215004 (CN); China General Nuclear Power Group, Futian District Shenzhen Guangdong 518000 (CN); CGN Power Co., Ltd., Futian District Shenzhen Guangdong 518000 (CN)
(72) Inventor: ZHANG, Pengfei, Suzhou, Jiangsu 215127 (CN); YU, Zhe, Suzhou, Jiangsu 215127 (CN); MA, Simin, Suzhou, Jiangsu 215127 (CN); WANG, Shuangyin, Suzhou, Jiangsu 215127 (CN); XU, Enwei, Suzhou, Jiangsu 215127 (CN); CHEN, Huaidong, Suzhou, Jiangsu 215127 (CN); LI, Jun, Suzhou, Jiangsu 215127 (CN); XU, Yikai, Suzhou, Jiangsu 215127 (CN); GAO, Sen, Suzhou, Jiangsu 215127 (CN); REN, Jianbo, Suzhou, Jiangsu 215127 (CN)
(74) Representative: Westphal, Mussgnug & Partner, Patentanwälte mbB
(86) International application number: PCT/CN2023/085520
(87) International publication number: WO 2024/197828

(57) **Abstract**

A driving device for a curved top cover, a positioning checker, and a positioning and detecting method. The driving device (1) comprises: a driving mechanism (11), comprising a driving frame (111), and a driving assembly (112) mounted on the driving frame (111), wherein the bottom of the driving frame (111) is provided with a wedge assembly attached to a top surface (01), and a flexible guide mechanism (12), which is configured to move the driving mechanism (11), which is on the top surface (01), along a check channel, and comprises a winding frame (121), and a chain (122) wound on the winding frame (121), wherein a free end of the chain (122) is fixedly connected to a front end of the driving mechanism (11). By virtue of a vertical arrangement of a plane on which a motion track is located when a laser emitter (21) and the chain (122) extend out, position calibration of a probe (31) in a first channel and a second channel can be rapidly achieved, and in combination with a characteristic that a bending direction of the chain(122) is limited, a projection of a moving track of the driving mechanism (11) on a bottom surface of the top cover (0) extends along a straight line to ensure movement along the check channel thereby ensuring that the probe (31) can be attached to the top cover (0)while moving along the check channel.

## Description

### FIELD

The invention belongs to the field of nuclear power inspection equipment and particularly relates to a driving device, a positioning and inspection mechanism, and a positioning and inspection method for a curved reactor pressure vessel head.

### BACKGROUND

The reactor pressure vessel reactor pressure vessel head in a nuclear power plant is the core equipment of a nuclear reactor. To ensure the safe operation of nuclear power plants, it is necessary to carry out surface and volume nondestructive testing on the base material of the reactor pressure vessel head regularly. Because the reactor pressure vessel head is spherical and blocked by CRDM penetrations and instrumentation penetrations, several belt-shaped areas to be inspected are formed. At present, no device can accurately position and move the probe along the belt-shaped area on the premise of keeping the probe adhered to the reactor pressure vessel head.

### SUMMARY

The object of the present invention is to provide that can make the probe move along a belt-shaped area on the premise of keeping the height of the probe and the reactor pressure vessel head constant, and the projection of the moving track on the bottom surface of the reactor pressure vessel head is a straight line.

To solve the above technical problems, the invention adopts the following technical scheme: a driving device for a curved reactor pressure vessel head, the reactor pressure vessel head comprises a first bottom surface and a curved top surface located on the first bottom surface, wherein the top surface is provided with a plurality of inspection channels, and the projection of the inspection channels on the first bottom surface extends along a straight line, wherin the driving device comprises:
A driving mechanism, comprising a driving frame, a driving assembly installed on the driving frame, and a wedge assembly installed at the bottom of the driving frame for keeping the driving frame parallel to the first bottom surface on the reactor pressure vessel head;
A flexible guiding mechanism for moving the driving mechanism along the inspection channel on the top surface, the flexible guiding mechanism comprises a winding rack and a chain wound on the winding rack, wherein the free end of the chain is fixedly connected with the front end of the driving frame, and the direction parallel to the upper end face of the driving frame and perpendicular to the front-back direction is the left-right direction;
The driving assembly comprises a magnetic wheel rotatably connected to the driving frame and a first driving motor for driving the magnetic wheel to rotate; the dimension of the driving frame in the left-right direction is its width, and the dimension of the chain in the left-right direction is its width. The chain comprises a plurality of chain plates which are connected in turn in rotation, pin shafts which pass through two adjacent chain plates, and a connecting piece for connecting the two adjacent pin shafts, the front and rear ends of the connecting piece are respectively connected with the same side ends of the two adjacent pin shafts in rotation; the two ends of the pin shaft are rotatably connected with rollers for preventing the chain plate from wearing the reactor pressure vessel head, and the rollers are located between the chain plate and the connecting piece on the same side thereof; a connecting groove and a connecting head are formed on the chain plate, the connecting head of the chain plate is located in the connecting groove of the chain plate at the front side thereof, and the pin shaft passes through the connecting head of the chain plate and the chain plate at the front side to rotationally connect the chain plate and the chain plate at the front side; an accommodating groove penetrating along the length direction of the chain is formed on the chain plate above the connecting groove;
The wedge assembly comprises a wedge fixed at the bottom of the driving frame, a supporting foot installed below the wedge and always having a movement tendency to protrude away from the driving frame, and an elastic member installed between the supporting foot and the wedge to make the supporting foot always have a movement tendency to protrude away from the driving frame; the supporting feet are respectively arranged on the wedge and located on the left and right sides of the lower end face of the wedge, and the maximum height difference that the supporting feet on the left and right sides can reach after respective expansion and contraction is not less than the height difference of the upper end face of the reactor pressure vessel head in the width direction of each inspection channel; there is a plurality of wedges, the lower end face of each wedge is an arc surface, and the arc surface of each wedge is respectively matched with the upper end face of the reactor pressure vessel head in an inspection channel.

The invention also provides a driving device for a curved reactor pressure vessel head, the reactor pressure vessel head comprises a first bottom surface and a curved top surface located on the first bottom surface, wherein the top surface is provided with a plurality of inspection channels, and the projection of the inspection channels on the first bottom surface extends along a straight line, and wherein the driving device comprises:
A driving mechanism, comprising a driving frame, a driving assembly installed on the driving frame, and a wedge assembly installed at the bottom of the driving frame for keeping the driving frame parallel to the first bottom surface on the reactor pressure vessel head;
A flexible guiding mechanism for moving the driving mechanism along the inspection channel on the top surface, the flexible guiding mechanism comprises a winding rack and a chain wound on the winding rack, wherein the free end of the chain is fixedly connected with the front end of the driving frame, and the direction parallel to the upper end face of the driving frame and perpendicular to the front-back direction is the left-right direction.

In another embodiment, the driving assembly comprises a magnetic wheel rotatably connected to the driving frame and a first driving motor for driving the magnetic wheel to rotate, and the magnetic wheel can always make the driving mechanism adsorbed on the reactor pressure vessel head.

In another embodiment, the dimension of the driving frame in the left-right direction is its width, and the dimension of the chain in the left-right direction is its width, and the widths of the driving frame and the chain are not greater than the width of the inspection channel so that the driving frame is limited by the first channel and the second channel to further ensure that it moves along the length direction of the inspection channel.

In another embodiment, the widths of the driving frame and the chain are both 0.5-2mm smaller than the width of the inspection channel, and to reduce the processing difficulty, the widths of the driving frame and the chain can be slightly smaller than the width of the inspection channel.

In another embodiment, the chain comprises a plurality of chain plates that are connected in turn, pin shafts that pass through two adjacent chain plates, and connecting pieces that are used for connecting the front and rear adjacent pin shafts, the front and rear ends of the connecting pieces are respectively connected with the same side ends of the adjacent pin shafts in rotation, and the connecting pieces can further ensure that the chain does not bend in the left-right direction.

In another embodiment, two ends of the pin shaft are rotatably connected with rollers to prevent the chain plate from wearing the reactor pressure vessel head, and the rollers are located between the chain plate and the connecting piece on the same side thereof.

In another embodiment, a connecting groove and a connecting head are formed on the chain plate, the connecting head of the chain plate is located in the connecting groove of the chain plate at the front side thereof, and the pin shaft passes through the connecting head of the chain plate and the chain plate at the front side to rotationally connect the chain plate and the chain plate at the front side; and the cooperation of the connecting groove and the connecting head can further ensure that the chain does not bend in the left-right direction.

In another embodiment, an accommodating groove penetrating along the length direction of the chain is formed on the chain plate above the connecting groove, which not only reduces the overall weight of the chain, but also can receive the cables of the driving device, the positioning mechanism, and the inspection mechanism, making wiring easier, and at the same time, due to the limitation of the bending angle of the chain plate, the cable can be prevented from being excessively bent to cause damage.

In another embodiment, the wedge assembly comprises a wedge fixed at the bottom of the driving frame, a supporting foot installed below the wedge and always having a movement tendency to protrude away from the direction of the driving frame, and an elastic member installed between the supporting foot and the wedge to make the supporting foot always have a movement tendency to protrude away from the driving frame. The telescopic design of the supporting foot ensures that the driving frame always remains parallel to the first bottom surface.

In another embodiment, the supporting feet are respectively arranged on the wedge and located on the left and right sides of the lower end face of the wedge, and the maximum height difference that the supporting feet on the left and right sides can reach after the respective expansion and contraction is not less than the height difference of the upper end face of the reactor pressure vessel head in the width direction of each inspection channel, which can meet the height difference of the upper end face of the reactor pressure vessel head in all inspection channels.

In another embodiment, to reduce the telescopic stroke of the supporting foot, there is a plurality of wedges, the lower end face of each wedge is an arc surface, and the arc surface of each wedge is respectively matched with the upper end face of the reactor pressure vessel head in an inspection channel.
The invention also provides a positioning and inspection mechanism for a curved reactor pressure vessel head, comprising the driving device described above;
A positioning mechanism, comprising a laser emitter and a camera, wherein the emitting direction of the laser emitted by the laser emitter is perpendicular to the projection of the inspection channel on the first bottom surface;

An inspection mechanism for inspecting the reactor pressure vessel head and the defects of components on the reactor pressure vessel head, which comprises a probe mounted on the rear end of the driving mechanism for inspection, and the probe can move in a direction perpendicular to the movement of the driving frame on a plane parallel to the first bottom surface, and the driving device can effectively and accurately complete the inspection of the reactor pressure vessel head in cooperation with the inspection mechanism and the positioning mechanism.

In another embodiment, the inspection mechanism comprises an adjusting assembly for driving the probe to adjust the position, the adjusting assembly comprises first side plates fixed on the left and right sides of the driving frame, a first slide rail arranged between the first side plates in the left-right direction, a first mounting housing slidably connected to the first slide rail, a second driving motor fixed in the first mounting housing and with an output shaft extending from the first mounting housing and a probe frame, a driving gear mounted on the second driving motor, a rack mounted on the driving frame and meshed with the driving gear, the probe is mounted on the probe frame, and the rack is located below the gear and arranged in the left-right direction. The second driving motor rotates to drive the gear to roll on the rack so that the first mounting housing moves on the first slide rail and finally drives the probe frame to move left and right. Therefore, the probe frame can move in the first direction and the second direction, and the reactor pressure vessel head can be fully inspected.

In another embodiment, the probe frame comprises a first supporting arm fixed on the first mounting housing and partially extending out of the driving frame, at least two second sliders fixed on the first supporting arm and symmetrically arranged with each other, second sliding rails respectively connected to the second sliders in a sliding way, and a telescopic member fixed on the first supporting arm and connected with the probe, and the telescopic member moves the probe and second sliding rails on a second slider, to ensure that the probe always adheres to the surface of the reactor pressure vessel head.

In another embodiment, the positioning and inspection mechanism comprises a limit assembly, which comprises pressing pieces installed on the driving frame and located on the left and right sides of the first mounting housing, a trigger fixed on the first mounting housing, a limit switch fixed on the driving frame by the pressing pieces. When the trigger located on the left side of the first mounting housing moves with the first mounting housing from right to left into the trigger range of the limit switch located on the left side of the driving frame. The second driving motor stops working and the first mounting housing reaches the left limit position. When the trigger located on the right side of the first mounting housing moves with the first mounting housing from left to right into the trigger range of the limit switch located on the right side of the driving frame, the second driving motor stops working and the first mounting housing reaches the right limit position, which can effectively prevent the first mounting housing from moving excessively and causing damage to all components.

In another embodiment, the probe comprises a probe body, a first probe mounting frame fixed between the second sliding rails, and a second probe mounting frame rotatably connected to the first probe mounting frame, wherein the rotating shaft of the second probe mounting frame on the first probe mounting frame extends in the front-back direction, and the probe body is rotatably connected to the second probe mounting frame, the rotating shaft of the probe body on the second probe mounting frame extends in the left-right direction. The two rotating axes are perpendicular to each other, so that the probe body can adapt to the change of the arc shape of the upper end face of the reactor pressure vessel head independently, and the telescopic member can further ensure that the probe body always adheres to the surface of the reactor pressure vessel head.

The invention also provides a positioning method for a positioning and inspection mechanism for a curved reactor pressure vessel head, wherein the projection of the penetrations of the reactor pressure vessel head on a first bottom surface can be divided into a plurality of groups along a first direction and also can be divided into a plurality of groups along a second direction, a first channel is formed between two adjacent groups of penetrating distributed along the first direction, and a second channel is formed between two adjacent groups of penetrating distributed along the second direction, and the inspection channel comprises the first channel and the second channel, and the first direction and the second direction intersect and both parallel to the first bottom surface. The positioning and inspection mechanism is the positioning and inspection mechanism described above, and the positioning method comprises the following steps:
a, fixing a winding rack on a flange of a reactor pressure vessel head, wherein the rotating shaft of a winding chain of the winding rack is parallel to a first bottom surface;
b, placing the driving mechanism on the reactor pressure vessel head so that the chain is arranged along the first channel;
c, mounting the laser emitter and the camera on the positioning mounting plate, so that the laser of the laser emitter can be emitted along the second direction, turning on the camera, and starting the driving mechanism to drive the probe to move forward, wherein the chain ensures that the driving mechanism moves forward along the first channel;
d, observing the position relationship between the laser line and the corresponding marking point of the probe through the camera until the laser line and the corresponding marking point coincide, that is, completing the position calibration in the first direction, and the marking point of the probe is located on the probe;
e, driving the probe to move along the second direction, to complete the current position calibration of the first channel in the second direction;
f, sequentially installing the driving mechanism and the flexible guiding mechanism at positions corresponding to other first channels, and repeating steps a-e to realize position calibration of all first channels;
g, similarly, rotating the installation positions of the laser emitter and camera, the driving mechanism and the flexible guiding mechanism in the same direction with the center of the reactor pressure vessel head as the center of the circle at the angle presented by the first channel and the second channel, and then repeating the calibration according to the above steps a-e to complete the position calibration of all the second channels.

The invention also provides a inspection method based on the positioning method described above, which comprises the following steps:
A, fixing a winding rack on a flange of a reactor pressure vessel head, wherein the rotating shaft of a winding chain of the winding rack is parallel to a first bottom surface;
B, placing the driving mechanism on the reactor pressure vessel head so that the chain is arranged along the first channel;
C, mounting the laser emitter and the camera on the positioning mounting plate, so that the laser of the laser emitter can be emitted along the second direction, turning on the camera, and starting the driving mechanism to drive the probe to move forward, wherein the chain ensures that the driving mechanism moves forward along the first channel;
D, observing the position relationship between the laser line and the corresponding marking point of the probe through the camera until the laser line and the corresponding marking point coincide, that is, completing the position calibration in the first direction;
E, driving the probe to move along the second direction so that the position calibration of the current first channel in the second direction can be completed; after the completing the calibration of the current first channel in the second direction, based on the calibration result, starting from any point, the probe is driven to move in the first direction and the second direction in turn by using the driving frame and the adjusting assembly, to complete the inspection of all positions in the current first channel; and the driving frame and the adjusting assembly can drive the probe to move in a rectangular wave mode on a plane parallel to the first bottom surface;
F, sequentially installing the driving mechanism and the flexible guiding mechanism at positions corresponding to other first channels, and repeating steps A-E to complete the inspection of all the first channels;
G, similarly, after rotating the installation positions of the laser emitter and the camera, the driving mechanism and the flexible guiding mechanism in the same direction with the center of the reactor pressure vessel head as the center of the circle at the angle presented by the first channel and the second channel, and then repeating the inspection according to the above steps A-E to complete the position inspection of all the second channels. Because the calibrated position reference objects are unified, the inspection can be reproduced based on the same reference standard, and the defects of the object to be detected can be accurately and quickly displayed again.

The invention has the beneficial effects that the position calibration in the first channel and the second channel of the probe can be quickly realized through the vertical arrangement of the plane where the motion track is when the laser emitter and the chain extend out, combined with the characteristic that the bending direction of the chain is limited, and the projection of the motion track of the driving mechanism on the bottom surface of the reactor pressure vessel head extends along a straight line to ensure that it moves along the inspection channel, and the probe can always adhere to the reactor pressure vessel head while moving along the inspection channel, so that the realization mode is simple and effective; realizing accurate positioning of the inspection equipment under the complex arc surface environment of the reactor pressure vessel head surface; because the calibrated position reference objects are unified, the inspection can be reproduced based on the same reference standard, and the defect position of the object to be detected and its defects can be accurately and quickly positioned again.

### BRIEF DESCRIPTION OF THE DRAWINGS

FIG. 1 is a top view of the present invention;
FIG. 2 is a schematic view of the present invention in an installed state;
FIG. 3 is a schematic structural view of the chain, the driving mechanism, and the inspection mechanism of the present invention when connected;
FIG. 4 is a schematic structural view of a wedge assembly with a high and low bottom surface (the supporting feet are not compressed);
FIG. 5 is a schematic structural view of a wedge assembly with a high and low bottom surface ( the right supporting foot in the figure has greater upward compression by the top surface force);
FIG. 6 is a schematic structural view of a wedge assembly with a symmetrical arc bottom surface (the supporting feet are not compressed);
FIG. 7 is a schematic structural view of a wedge assembly with a symmetrical arc bottom surface (the left and right supporting feet in the figure are compressed upward by the top surface force);
FIG. 8 is a partial view at A in FIG. 3; and
FIG. 9 is a schematic structural view of the probe.

### DETAILED DESCRIPTION

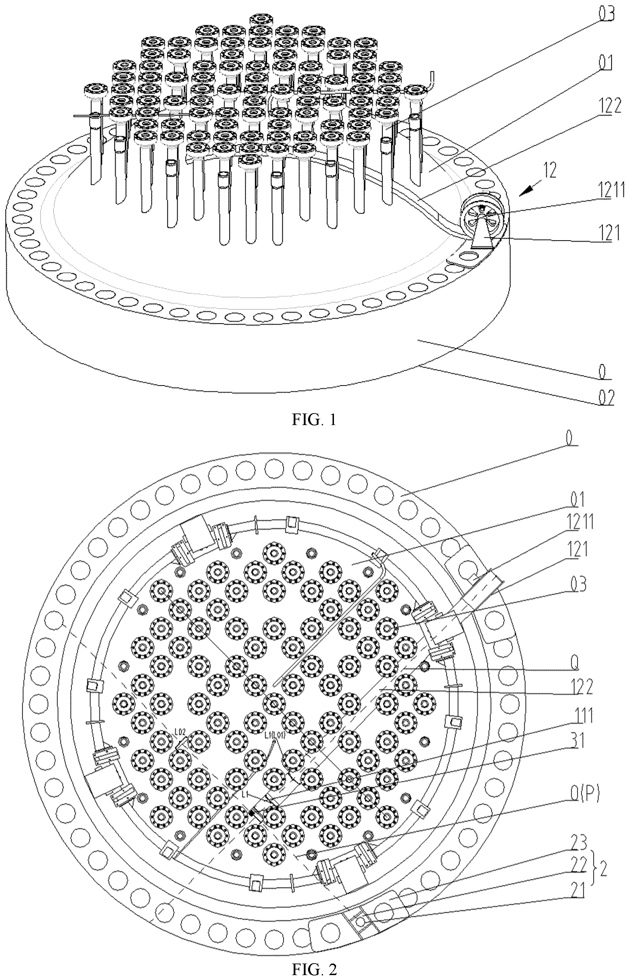

The invention will be described in following detail with reference to the embodiments shown in the attached drawings:
As shown in Figures 1 and 2, the pressure vessel reactor pressure vessel head 0 includes a first bottom surface 02 and a curved top surface 01 located on the first bottom surface 02. The top surface 01 has a plurality of inspection channels, and the projection of the inspection channels on the first bottom surface 02 extends along a straight line. The projection of penetration 03 on the reactor pressure vessel head on the first bottom surface can be divided into groups along the first direction and also can be divided into groups along the second direction. A first channel Q is formed between two adjacent groups of penetrations distributed along the first direction, and a second channel P is formed between two adjacent groups of penetration distributed along the second direction. The inspection channel includes the first channel Q and the second channel P, the first direction and second direction intersect and are parallel to the first bottom surface 02. In this embodiment, the first direction and second direction are perpendicular.

As shown in Figures 1-3, the positioning and inspection mechanism includes a driving device 1, a positioning mechanism 2, an inspection mechanism 3, and a limit assembly 4.

The driving device 1 includes a driving mechanism 11 and a flexible guiding mechanism 12.

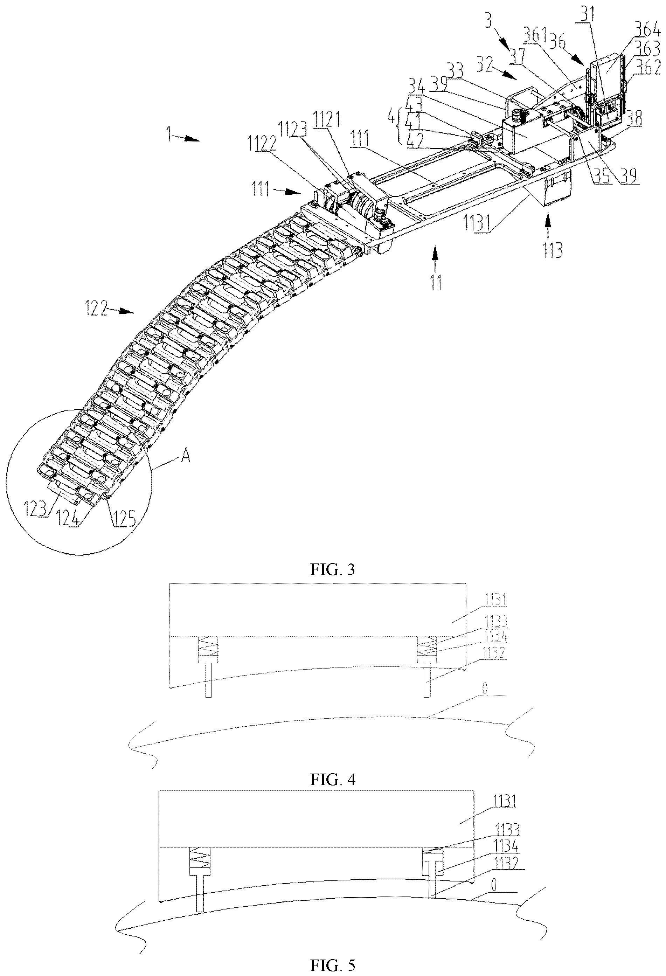

The driving mechanism 11 comprises a driving frame 111 and a driving assembly 112 mounted on the driving frame 111, wherein the bottom of the driving frame 111 is provided with a wedge assembly for keeping the driving frame in a parallel state with the first bottom surface on the reactor pressure vessel head; the driving assembly 112 includes a magnetic wheel 1121 rotatably connected to the driving frame 111, and a first driving motor 1122 that drives the magnetic wheel 1121 to rotate through a pulley assembly 1123. As shown in FIGS. 4-7, the wedge assembly 113 includes a wedge 1131 fixed at the bottom of the driving frame 111, a supporting foot 1132 installed below the wedge 1131 and always having a movement tendency to protrude away from the driving frame 111, an elastic member 1133 installed between the supporting foot 1132 and the wedge 1131 so that the supporting foot 1132 always has a movement tendency to protrude away from the driving frame 111. The flexible guiding mechanism 12 is fixedly connected to the front end of the driving frame 111, and the direction parallel to the upper end face of the driving frame 111 and perpendicular to the front-back direction is the left-right direction.

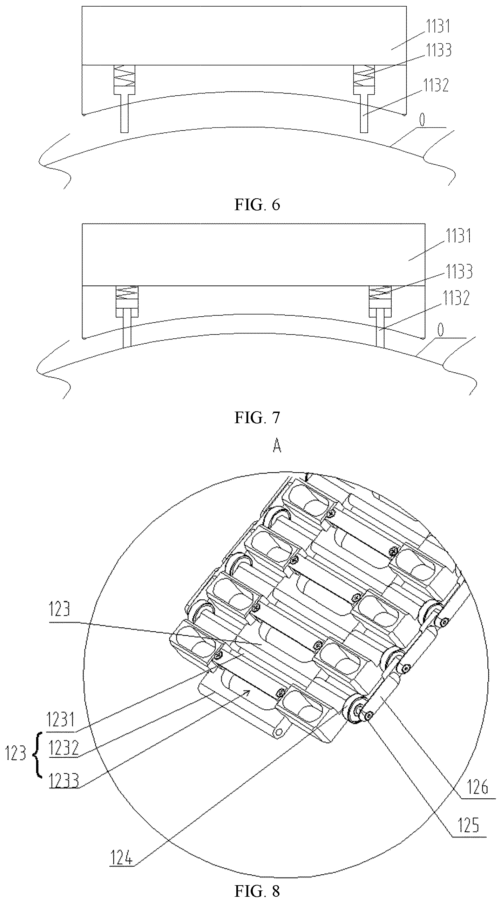

The lower end face of the wedge block 1131 is provided with a telescopic cavity 1134 with a big belly and a small mouth to accommodate the supporting feet 1132, the upper end of the supporting foot 1132 is thick and completely located in the larger part of the telescopic cavity 1134, and the lower end of the supporting foot extends out of the telescopic cavity 1134. The elastic member 1133 causes the supporting feet 1132 to tend to move outward toward the telescoping cavity 1134. The supporting feet 1132 are arranged on the wedges 1131 respectively and located on the left and right sides of the lower end faces of the wedges 1131. The maximum height difference that the supporting feet 1132 on the left and right sides can reach after respective expansion and contraction is not less than the height difference of the upper end faces of the reactor pressure vessel heads in the width direction of each inspection channel. To reduce the expansion and contraction stroke of the supporting feet, there is a plurality of wedges 1131, the lower end faces of each wedge 1131 are arc surfaces, and the arc surfaces of each wedge 1131 are respectively matched with an upper end face of the reactor pressure vessel heads in one inspection channel, the inspection channels with identical arc surfaces may share a single wedge 1131, with the supporting foot uncompressed in FIG. 4. In FIG. 5, the upward compression of the right supporting foot by the top surface force is greater. The supporting feet in FIG. 6 are not compressed. In FIG. 7, the left and right supporting feet are compressed upward by the top surface force.

The width L1 of the driving frame 111 is not greater than the width LO1 of the first channel and the width L02 of the second channel. When the width L1 of the driving frame 111 is less than the width LO1 of the first channel and the width L02 of the second channel, 0 < LO1-L1 ≤ 2mm and 0 < L02-L2 ≤ 2mm, and the three are of the same width is optimal, the driving frame 111 can be limited by the first channel and the second channel, it is further ensured that it moves along the length of the inspection channel.

The flexible guiding mechanism 12 is used to make the driving mechanism 11 move on the top surface 01 along the inspection channel, and the flexible guiding mechanism 12 includes a winding rack 121 and a chain 122 wound on the winding rack 121, wherein the free end of the chain 122 is fixedly connected with the front end of the driving frame 111, and the direction parallel to the upper end face of the driving frame 111 and perpendicular to the front-back direction is the left-right direction. The end fixed on the winding shaft 1211 of the winding rack 121 is the fixed end of the chain 122, and the other end is its free end. As shown in Figure 8, the chain 122 includes a plurality of chain plates 123 which are connected in turn in rotation, pin shafts 124 which pass through two adjacent chain plates 123, and connecting pieces 126 for connecting two pin shafts 124 adjacent to each other front and rear, and the front and rear ends of the connecting pieces 126 are rotationally connected to the same side ends of the two adjacent pin shafts 124 respectively. The two ends of the pin shaft 124 are rotatably connected with rollers 125 for preventing the chain plate 123 from wearing the reactor pressure vessel head, and the rollers 125 are located between the chain plate 123 and a connecting piece 126 on the same side of the chain plate 123 as the rollers 125. A connecting groove 1231 and a connecting head 1232 are formed on the chain plate 123, and the connecting head 1232 of the chain plate 123 is located in the connecting groove 1231 of the chain plate 123 at its front side, and the pin shaft 124 passes through the connecting head 1232 of the chain plate 123 and the chain plate 123 at its front side to rotationally connect the chain plate 123 and the chain plate 123 at its front side. The chain plate 123 above the connecting groove 1231 is formed with an accommodating groove 1233 penetrating along the length direction of the chain 122, which not only reduces the overall weight of the chain 122, but also can receive cables of the driving device, the positioning mechanism and the inspection mechanism, making wiring easier. At the same time, due to the limitation of the bending angle of the chain plate, the cable can be prevented from being excessively bent to cause damage. The width L2 of the chain 122 is not greater than the width LO1 of the first channel and the width L02 of the second channel. When the width L2 of the chain 122 is less than the width LO1 of the first channel and the width L02 of the second channel, 0 < LO1-L2 ≤ 2 mm and 0 < L02-L2 ≤ 2 mm, and the three are of the same width is optimal. At this time, the chain 122 can be limited by the first channel and the second channel, it is further ensured that it moves along the length of the inspection channel.

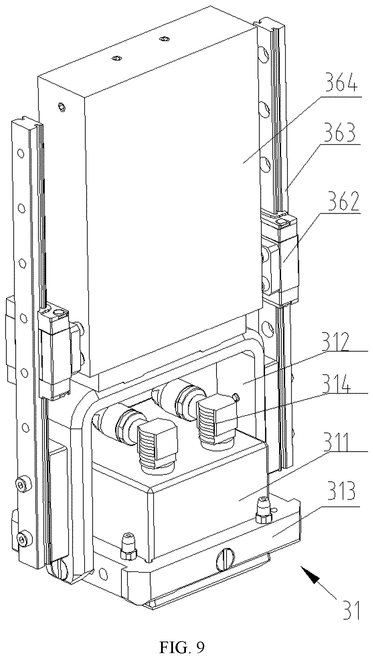

The positioning mechanism 2 includes a laser emitter 21, a camera 22 and a positioning mounting plate 23, wherein the emitting direction of the laser emitted by the laser emitter 21 is perpendicular to the projection of the inspection channel on the first bottom surface 02;
The inspection mechanism 3 is used for inspecting the defects of the reactor pressure vessel head 0 and the components on the reactor pressure vessel head 0, and includes a probe 31 installed at the rear end of the driving mechanism 11 for inspection, an adjusting assembly 32 for driving the probe 31 to adjust the position. The adjusting assembly 32 includes a first slide rail 33 fixed on the driving frame 111 and arranged along the left-right direction, a first mounting housing 34 slidably connected to the first slide rail 33, a second driving motor 35 and a probe frame 36 fixed in the first mounting housing 34 and an output shaft extending out of the first mounting housing 34, a driving gear 37 mounted on the second driving motor 35, and a rack 38 mounted on the driving frame 111 and meshed with the driving gear 37. The probe 31 is mounted on the probe frame 36, and the rack 38 is located below the gear and arranged along the left-right direction. The second driving motor 35 rotates to drive the gear to roll on the rack 38, and then the first mounting housing 34 moves on the first slide rail 33, and finally the probe frame 36 is driven left and right. The probe frame 36 includes a first supporting arm 361 fixed on the slider and partially extending out of the driving frame 111, at least two second sliders 362 fixed on the first supporting arm 361 and symmetrically arranged with each other, second sliding rails 363 slidably connected to the second sliders 362, a second sliding rail 363 slidingly connected to the second sliders 362 respectively ,a telescopic member 364 fixed on the first supporting arm 361 and connected with the probe 31. The telescopic member 364 drives the probe 31 and the second sliding rail 363 to move on the second sliders 362, that is, to move along the direction perpendicular to the movement of the driving frame 111 on the plane parallel to the first bottom surface 02. The telescopic member 364 can be an air cylinder, a hydraulic cylinder, or a spring, which can make the probe 31 always fit the reactor pressure vessel head surface. As shown in FIG. 9, the probe includes a probe body 311, a first probe mounting frame 312 fixed between the second sliding rails 363, a second probe mounting frame 313 rotatably connected to the first probe mounting frame 312, and a coupling agent connector 314 mounted on the probe body 311 for providing a coupling agent to the probe body 311, the rotating shaft of the second probe mounting frame 313 on the first probe mounting frame 312 extends along the front-back direction. The probe body 311 is rotatably connected to the second probe mounting frame 313. The rotating shaft of the probe body 311 on the second probe mounting frame 313 extends along the left-right direction, and the two rotating axes are perpendicular to each other, so that the probe body 311 can adapt to the change of the arc shape of the upper end face of the reactor pressure vessel head independently, and the telescopic member 364 can further ensure that the probe body 311 always adheres to the surface of the reactor pressure vessel head.

The limit assembly 4 includes pressing pieces 41 installed on the driving frame and located on the left and right sides of the first mounting housing 34, a trigger 42 fixed on the first mounting housing 34, and a limit switch 43 fixed on the driving frame 111 by the pressing pieces 41. When the trigger 42 located on the left side of the first mounting housing 34 moves with the first mounting housing 34 from right to left into the trigger range of the limit switch 43 located on the left side of the driving frame 111, the second driving motor 35 stops working, the first mounting housing 34 reaches the left limit position. When the trigger 42 located on the right side of the first mounting housing 34 moves from left to right with the first mounting housing 34 into the trigger range of the limit switch located on the right side of the driving frame 111, the second driving motor 35 stops working and the first mounting housing 34 reaches the right limit position.

A positioning method for a positioning and inspection mechanism for a curved reactor pressure vessel head includes the following steps:
a, fixing a winding rack on a flange of a reactor pressure vessel head, wherein the rotating shaft of a winding chain of the winding rack is parallel to a first bottom surface;
b, placing the driving mechanism on the reactor pressure vessel head so that the chain is arranged along the first channel;
c, mounting the positioning mounting plate on the reactor pressure vessel head, and mounting the laser emitter and the camera on the positioning mounting plate, so that the laser O of the laser emitter is emitted in the second direction, the camera is turned on, and starting the driving mechanism to drive the probe to move forward, and the chain ensures that the driving mechanism moves forward along the first channel;
d, observing the position relationship between the laser line and the corresponding marking point of the probe through the camera until the laser line and the corresponding marking point coincide, that is, completing the position calibration in the first direction, and the marking point of the probe is located on the probe;
e, driving the probe to move along the second channel, to complete the current position calibration of the first channel in the second direction;
f, sequentially installing the driving mechanism and the flexible guiding mechanism at positions corresponding to other first channels, and repeating steps A-E to realize position calibration of all first channels;
g. Similarly, rotating the installation positions of the laser emitter and camera, the driving mechanism and the flexible guiding mechanism by 90 degrees in the same direction with the center of the reactor pressure vessel head as the center of the circle, and then repeating the calibration according to the above steps a-e to complete the position calibration of all the second channels.

The inspection method based on the positioning method described above, includes the following steps:
A, fixing a winding rack on a flange of a reactor pressure vessel head, wherein the rotating shaft of a winding chain of the winding rack is parallel to a first bottom surface;
B, placing the driving mechanism on the reactor pressure vessel head so that the chain is arranged along the first channel;
C, mounting the laser emitter and the camera on the positioning mounting plate, so that the laser of the laser emitter can be emitted along the second direction, turning on the camera, and starting the driving mechanism to drive the probe to move forward, wherein the chain ensures that the driving mechanism moves forward along the first channel;
D, observing the position relationship between the laser line and the corresponding marking point of the probe through the camera until the laser line and the corresponding marking point coincide, that is, completing the position calibration in the first direction, and completing the inspection in the first channel at the same time of calibration;
E, driving the probe to move along the second channel so that the current position calibration of the first channel in the second direction can be completed, and the inspection in the second direction in the first channel can be completed at the same time of calibration;
F, sequentially installing the driving mechanism and the flexible guiding mechanism at positions corresponding to other first channels, and repeating steps A-E to complete the inspection of all the first channels;
G, similarly, rotating the installation positions of the laser emitter and camera, the driving mechanism and the flexible guiding mechanism by 90 degrees in the same direction with the center of the reactor pressure vessel head as the center of the circle, and repeating the inspection according to the above steps A-E to complete the position inspection of all the second channels.

The above embodiments only serve to illustrate the technical concepts and features of the present invention, and are intended to enable those familiar with the technology to understand the content of the present invention and to implement it accordingly, and do not limit the scope of protection of the present invention in this way. Any equivalent changes or modifications made in accordance with the spirit of the present invention are covered by the scope of protection of the present invention.

## Claims

1. A driving device for a curved reactor pressure vessel head, the reactor pressure vessel head comprises a first bottom surface and a curved top surface located on the first bottom surface, wherein the top surface is provided with a plurality of inspection channels, and the projection of the inspection channels on the first bottom surface extends along a straight line, wherein the driving device comprises:
a driving mechanism, comprising a driving frame, a driving assembly installed on the driving frame, and a wedge assembly installed at the bottom of the driving frame for keeping the driving frame parallel to the first bottom surface on the reactor pressure vessel head;
a flexible guiding mechanism for moving the driving mechanism along the inspection channel on the top surface, the flexible guiding mechanism comprises a winding rack and a chain wound on the winding rack, wherein the free end of the chain is fixedly connected with the front end of the driving frame, and the direction parallel to the upper end face of the driving frame and perpendicular to the front-back direction is the left-right direction;
the driving assembly comprises a magnetic wheel rotatably connected to the driving frame and a first driving motor for driving the magnetic wheel to rotate; the dimension of the driving frame in the left-right direction is its width, and the dimension of the chain in the left-right direction is its width, the chain comprises a plurality of chain plates which are connected in turn in rotation, pin shafts which pass through two adjacent chain plates, and a connecting piece for connecting the two adjacent pin shafts in front and rear, the front and rear ends of the connecting piece are respectively connected with the same side ends of the two adjacent pin shafts in rotation; the two ends of the pin shaft are rotatably connected with rollers for preventing the chain plate from wearing the reactor pressure vessel head, and the rollers are located between the chain plate and the connecting piece on the same side thereof; a connecting groove and a connecting head are formed on the chain plate, the connecting head of the chain plate is located in the connecting groove of the chain plate at the front side thereof, and the pin shaft passes through the connecting head of the chain plate and the chain plate at the front side to rotationally connect the chain plate and the chain plate at the front side; an accommodating groove penetrating along the length direction of the chain is formed on the chain plate above the connecting groove;
the wedge assembly comprises a wedge fixed at the bottom of the driving frame, a supporting foot installed below the wedge and always having a movement tendency to protrude away from the direction of the driving frame, and an elastic member installed between the supporting foot and the wedge to make the supporting foot always have a movement tendency to protrude away from the driving frame; the supporting feet are respectively arranged on the wedge and located on the left and right sides of the lower end face of the wedge, and the maximum height difference that the supporting feet on the left and right sides can reach after respective expansion and contraction is not less than the height difference of the upper end face of the reactor pressure vessel head in the width direction of each inspection channel; there are a plurality of wedges, the lower end face of each wedge is an arc surface, and the arc surface of each wedge is respectively matched with the upper end face of the reactor pressure vessel head in an inspection channel.

2. A driving device for a curved reactor pressure vessel head, the reactor pressure vessel head comprises a first bottom surface and a curved top surface located on the first bottom surface, wherein the top surface is provided with a plurality of inspection channels, and the projection of the inspection channels on the first bottom surface extends along a straight line, wherein the driving device comprises:
a driving mechanism, comprising a driving frame, a driving assembly installed on the driving frame, and a wedge assembly installed at the bottom of the driving frame for keeping the driving frame parallel to the first bottom surface on the reactor pressure vessel head;
a flexible guiding mechanism for moving the driving mechanism along the inspection channel on the top surface, the flexible guiding mechanism comprises a winding rack and a chain wound on the winding rack, wherein the free end of the chain is fixedly connected with the front end of the driving frame, and the direction parallel to the upper end face of the driving frame and perpendicular to the front-back direction is the left-right direction.

3. The driving device for a curved reactor pressure vessel head according to claim 2, wherein the driving assembly comprises a magnetic wheel rotatably connected to the driving frame and a first driving motor for driving the magnetic wheel to rotate.

4. The driving device for a curved reactor pressure vessel head according to claim 2, wherein the dimension of the driving frame in the left-right direction is its width, the dimension of the chain in the left-right direction is its width, and the widths of the driving frame and the chain are not greater than the width of the inspection channel.

5. The driving device for a curved reactor pressure vessel head according to claim 4, wherein the widths of the driving frame and the chain are 0.5-2mm smaller than the width of the inspection channel.

6. The driving device for a curved reactor pressure vessel head according to claim 2, wherein the chain comprises a plurality of chain plates that are connected in turn in rotation, pin shafts that pass through two adjacent chain plates, and a connecting piece for connecting two adjacent pin shafts in front and rear, the front and rear ends of the connecting piece are respectively connected in rotation with the same side ends of two adjacent pin shafts.

7. The driving device for a curved reactor pressure vessel head according to claim 6, wherein two ends of the pin shaft are rotatably connected with rollers to prevent the chain plate from wearing the reactor pressure vessel head, and the rollers are located between the chain plate and the connecting piece on the same side thereof.

8. The driving device for a curved reactor pressure vessel head according to claim 6, wherein a connecting groove and a connecting head are formed on the chain plate, the connecting head of the chain plate is located in the connecting groove of the chain plate at the front side thereof, and the pin shaft passes through the connecting head of the chain plate and the chain plate at the front side to rotationally connect the chain plate and the chain plate at the front side.

9. The driving device for a curved reactor pressure vessel head according to claim 6, wherein an accommodating groove penetrating along the length direction of the chain is formed on the chain plate above the connecting groove.

10. The driving device for a curved reactor pressure vessel head according to claim 2, wherein the wedge assembly comprises a wedge fixed at the bottom of the driving frame, a supporting foot installed below the wedge and always having a movement tendency to protrude away from the driving frame, and an elastic member installed between the supporting foot and the wedge to make the supporting foot always have a movement tendency to protrude away from the driving frame.

11. The driving device for a curved reactor pressure vessel head according to claim 10, wherein the supporting feet are respectively arranged on the wedge and located on the left and right sides of the lower end face of the wedge, and the maximum height difference that the supporting feet on the left and right sides can reach after respective expansion and contraction is not less than the height difference of the upper end face of the reactor pressure vessel head in the width direction of each inspection channel.

12. The driving device for a curved reactor pressure vessel head according to claim 10, wherein there are a plurality of wedges, the lower end face of each wedge is an arc surface, and the arc surface of each wedge is respectively matched with the upper end face of the reactor pressure vessel head in an inspection channel.

13. A positioning and inspection mechanism for a curved reactor pressure vessel head, comprising:
the driving device according to any one of claims 1 to 12;
a positioning mechanism, comprising a laser emitter and a camera, wherein the emitting direction of the laser emitted by the laser emitter is perpendicular to the projection of the inspection channel on the first bottom surface;
an inspection mechanism for inspecting the reactor pressure vessel head and the defects of components on the reactor pressure vessel head, which comprises a probe mounted on the rear end of the driving mechanism for inspection, and the probe can move in a direction perpendicular to the direction of the movement of the driving frame on a plane parallel to the first bottom surface.

14. The positioning and inspection mechanism for a curved reactor pressure vessel head according to claim 13, wherein the inspection mechanism comprises an adjusting assembly for driving the probe to adjust the position, the adjusting assembly comprises first side plates fixed on the left and right sides of the driving frame, a first slide rail arranged between the first side plates in the left-right direction, a first mounting housing slidably connected to the first slide rail, a second driving motor fixed in the first mounting housing and with an output shaft extending from the first mounting housing and a probe frame, a driving gear mounted on the second driving motor, a rack mounted on the driving frame and meshed with the driving gear, the probe is mounted on the probe frame, the rack is located below the gear and arranged in the left-right direction, and the second driving motor rotates to drive the gear to roll on the rack, so that the first mounting housing moves on the first slide rail and finally drives the probe frame to move left and right.

15. The positioning and inspection mechanism for a curved reactor pressure vessel head according to claim 14, wherein the probe frame comprises a first supporting arm fixed on the first mounting housing and partially extending out of the driving frame, at least two second sliders fixed on the first supporting arm and symmetrically arranged with each other, second sliding rails respectively connected to the second sliders in a sliding way, and a telescopic member fixed on the first supporting arm and connected with the probe, and the telescopic member moves the probe and second sliding rails on a second slider.

16. The positioning and inspection mechanism for a curved reactor pressure vessel head according to claim 15, wherein the positioning and inspection mechanism comprises a limit assembly, which comprises pressing pieces installed on the driving frame and located at the left and right sides of the first mounting housing, a trigger fixed on the first mounting housing, a limit switch fixed on the driving frame by the pressing pieces, when the trigger located on the left side of the first mounting housing moves with the first mounting housing from right to left into the trigger range of the limit switch located on the left side of the driving frame, the second driving motor stops working and the first mounting housing reaches the left limit position; when the trigger on the right side of the first mounting housing moves with the first mounting housing from left to right into the trigger range of the limit switch on the right side of the driving frame, the second driving motor stops working and the first mounting housing reaches the right limit position.

17. The positioning and inspection mechanism for a curved reactor pressure vessel head according to claim 15, wherein the probe comprises a probe body, a first probe mounting frame fixed between the second sliding rails, and a second probe mounting frame rotatably connected to the first probe mounting frame, wherein the rotating shaft of the second probe mounting frame on the first probe mounting frame extends in the front-back direction, and the probe body is rotatably connected to the second probe mounting frame, the rotating shaft of the probe body on the second probe mounting frame extends in a left-right direction.

18. A positioning method for a positioning and inspection mechanism for a curved reactor pressure vessel head, wherein the projection of a penetration of the reactor pressure vessel head on a first bottom surface can be divided into a plurality of groups along a first direction and also can be divided into a plurality of groups along a second direction, a first channel is formed between two adjacent groups of penetrations distributed along the first direction, and a second channel is formed between two adjacent groups of penetrations distributed along the second direction, and the inspection channel comprises the first channel and the second channel, and the first direction and the second direction intersect and both parallel to the first bottom surface, wherein the positioning and inspection mechanism is the positioning and inspection mechanism according to claim 13, and the positioning method comprises the following steps:
a, fixing a winding rack on the flange of the reactor pressure vessel head, wherein the rotating shaft of a winding chain of the winding rack is parallel to the first bottom surface;
b, placing the driving mechanism on the reactor pressure vessel head so that the chain is arranged along the first channel;
c, mounting the laser emitter and the camera on the positioning mounting plate, so that the laser of the laser emitter can be emitted along the second direction, turning on the camera, and starting the driving mechanism to drive the probe to move forward, wherein the chain ensures that the driving mechanism moves forward along the first channel;
d, observing the position relationship between the laser line and the corresponding marking point of the probe through the camera until the laser line and the corresponding marking point coincide, that is, completing the position calibration in the first direction, and the marking point of the probe is located on the probe;
e, driving the probe to move along the second direction, to complete the current position calibration of the first channel in the second direction;
f, sequentially installing the driving mechanism and the flexible guiding mechanism at positions corresponding to other first channels, and repeating steps a-e to realize position calibration of all first channels;
g, similarly, rotating the installation positions of the laser emitter and camera, the driving mechanism and the flexible guiding mechanism in the same direction with the center of the reactor pressure vessel head as the center of the circle at the angle presented by the first channel and the second channel, and then repeating the calibration according to the above steps a-e to complete the position calibration of all the second channels.

19. A inspection method based on the positioning method as claimed in claim 18, comprising the following steps:
A, fixing the winding rack on a flange of the reactor pressure vessel head, wherein the rotating shaft of the winding chain of the winding rack is parallel to a first bottom surface;
B, placing the driving mechanism on the reactor pressure vessel head so that the chain is arranged along the first channel;
C, mounting the laser emitter and the camera on the positioning mounting plate, so that the laser of the laser emitter can be emitted along the second direction, turning on the camera, and starting the driving mechanism to drive the probe to move forward, wherein the chain ensures that the driving mechanism moves forward along the first channel;
D, observing the position relationship between the laser line and the corresponding marking point of the probe through the camera until the laser line and the corresponding marking point coincide, that is, completing the position calibration in the first direction;
E, driving the probe to move along the second direction so that the position calibration of the current first channel in the second direction can be completed; after completing the calibration of the current first channel in the second direction, based on the calibration result, starting from any point, the probe is driven to move in the first direction and the second direction in turn by using the driving frame and the adjusting assembly, to complete the inspection of all positions in the current first channel;
F, sequentially installing the driving mechanism and the flexible guiding mechanism at positions corresponding to other first channels, and repeating steps A-E to complete the inspection of all the first channels;
G, similarly, after rotating the installation positions of the laser emitter and camera, the driving mechanism and the flexible guiding mechanism in the same direction with the center of the reactor pressure vessel head as the center of the circle at the angle presented by the first channel and the second channel, and then repeating the inspection according to the above steps A-E to complete the position inspection of all the second channels.
